(19) Europäisches Patentamt
European Patent Office
Office européen des brevets

(11) **EP 2 122 428 B1**

(12) **EUROPÄISCHE PATENTSCHRIFT**

(45) Veröffentlichungstag und Bekanntmachung des Hinweises auf die Patenterteilung:
**06.04.2011 Patentblatt 2011/14**

(21) Anmeldenummer: **08708833.2**

(22) Anmeldetag: **08.02.2008**

(51) Int Cl.:
***G05B 19/418*** *(2006.01)*

(86) Internationale Anmeldenummer:
**PCT/EP2008/051564**

(87) Internationale Veröffentlichungsnummer:
**WO 2008/096006 (14.08.2008 Gazette 2008/33)**

(54) **VERFAHREN UND SYSTEM ZUR ERMITTLUNG VON ZUVERLÄSSIGKEITSPARAMETERN EINER TECHNISCHEN ANLAGE**

METHOD AND SYSTEM FOR DETERMINING RELIABILITY PARAMETERS OF A TECHNICAL INSTALLATION

PROCÉDÉ ET SYSTÈME DE DÉTERMINATION DE PARAMÈTRES DE FIABILITÉ D'UNE INSTALLATION TECHNIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **08.02.2007 DE 102007006365**

(43) Veröffentlichungstag der Anmeldung:
**25.11.2009 Patentblatt 2009/48**

(73) Patentinhaber: **Siemens Aktiengesellschaft 80333 München (DE)**

(72) Erfinder:
• **HERRMANN, Jürgen**
  **76307 Karlsbad (DE)**
• **KONNOV, Alexei**
  **76187 Karlsruhe (DE)**

(56) Entgegenhaltungen:
**US-A- 5 014 220       US-A1- 2002 002 448**
**US-A1- 2005 027 379**

EP 2 122 428 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und System zur Ermittlung von Zuverlässigkeitsparametern einer technischen Anlage.

Die Entwicklung und der Betrieb von modernen technischen Systemen sind ohne entsprechende Zuverlässigkeitsanalyse undenkbar. Um die quantitativen Aussagen bezüglich der Zuverlässigkeit eines technischen Systems treffen zu können, werden heutzutage diverse Methoden der Zuverlässigkeitsberechnung verwendet. Dabei kommt überwiegend die Methode der Markovschen Minimalschnitte zum Einsatz.

Das Verfahren der Markovschen Minimalschnitte ist eine Kombination des Verfahrens der Markov-Prozesse und des Minimalschnittverfahrens. Ein Minimalschnittverfahren ist ein spezielles Verfahren zur Bestimmung der Zuverlässigkeit eines Systems oder von Komponenten, das die Komponentenausfallzustände betrachtet, die zum Ausfall des Systems führen.

Ein Markov-Prozess besteht aus Markov-Zuständen (Komponentenoder Systemzustände) und zeichnet sich durch die Eigenschaft aus, dass die zukünftige Entwicklung des Zustands an einem gegebenen Zeitpunkt unabhängig von der Vergangenheit des Prozesses ist. Zustandsveränderungen - bzw. -übergänge sind durch konstante Übergangsraten gekennzeichnet.

Der Grundgedanke des Verfahrens der Markovschen Prozesse sei an einem Beispiel illustriert. Eine einzelne Betrachtungseinheit A, die in Betrieb genommen wird, soll nacheinander zwei Zustände annehmen, nämlich Zustand Z1: Einheit intakt, und Zustand Z2: Einheit ausgefallen. Die Ausfallrate von A sei $\lambda$ und als konstant angenommen. Gesucht sind die Wahrscheinlichkeiten, dass sich die Betrachtungseinheit A zu einem beliebigen Zeitpunkt t in Zustand *Z1 bzw. Zustand Z2 befindet. Die zeitliche Änderung der Wahrscheinlichkeiten der Zustände Z1 und Z2 lässt sich durch das folgende Gleichungssystem berechnen:

$$\frac{dP_1(t)}{dt} = -\lambda P_1(t) + \mu P_2(t)$$
$$\frac{dP_2(t)}{dt} = \lambda P_1(t) - \mu P_2(t) \tag{1}$$

Dabei ist: $P_1(t)$ = Wahrscheinlichkeit, dass sich die Betrachtungseinheit A zum Zeitpunkt t im Zustand Z1 (=intakt) befindet.

$P_2(t)$ = Wahrscheinlichkeit, dass sich die Betrachtungseinheit A zum Zeitpunkt t im Zustand Z2 (=ausgefallen) befindet. $\lambda$ bezeichnet die Ausfallrate und $\mu$ bezeichnet die Reparaturrate der Betrachtungseinheit A.

$\lambda$ und $\mu$ werden auch als Übergangsraten bezeichnet, denn die Zustände Z1 (Einheit intakt) und Z2 (Einheit ausgefallen) von A gehen aufgrund von $\lambda$ und $\mu$ ineinander über. Gleichung (1) kann auch in Form einer Matrixschreibweise dargestellt werden. Die Matrix, die aus dem o.a. Gleichungssystem hervorgeht

$$\begin{pmatrix} -\lambda & \mu \\ \lambda & -\mu \end{pmatrix} \tag{2}$$

wird auch als Übergangsmatrix bezeichnet. Zu beachten ist, dass die Summe der Elemente in jeder Spalte verschwindet.

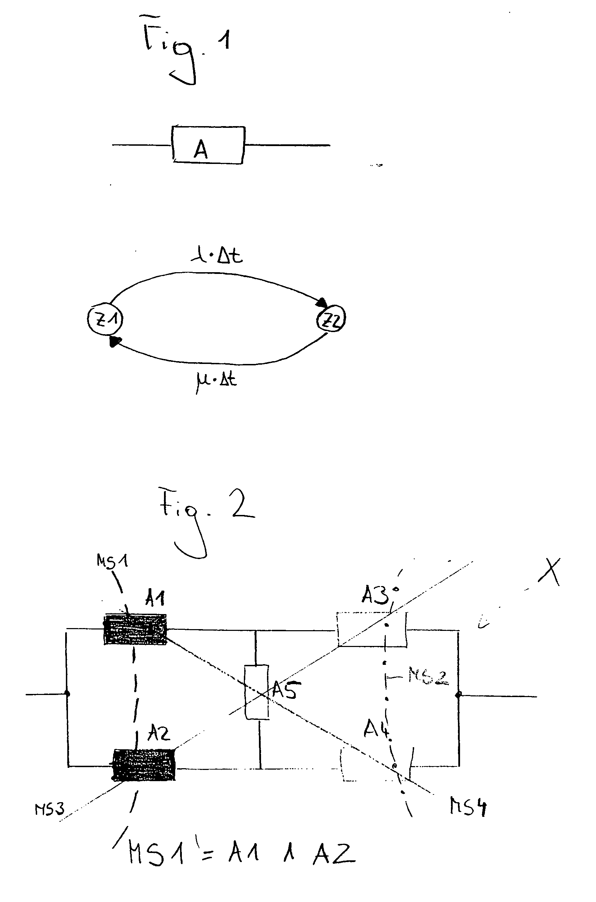

Das Gleichungssystem (1) kann ebenfalls durch ein Zustandsdiagramm oder einen Zustandsgraphen verdeutlicht werden. Fig. 1 zeigt als Kreissymbole die möglichen Zustände Z1 und Z2 der Betrachtungseinheit A, die hier als einzelnes Schaltungselement dargestellt ist. Die innerhalb eines Intervalls [t,t+$\Delta$t] möglichen Zustandsübergänge sind durch Pfeile mit den dazugehörigen Übergangsraten $\lambda$ und $\mu$ multipliziert mit dem Zeitintervall $\Delta$t gekennzeichnet.

Zur Anwendung eines Zuverlässigkeitsbestimmungsverfahrens für eine technische Anlage muss diese entweder als logische Struktur in Form einer funktionalen Struktur, als Konstruktionsplan oder in Form von Zuverlässigkeitsblockdiagrammen (ZBD) vorliegen und diese Struktur muss anschließend analysiert werden. Ein Zuverlässigkeitsblockdiagramm ist ein Ereignisdiagramm und beantwortet die Frage, welche Komponenten für die Erfüllung der geforderten Funktion arbeiten müssen (womit diese Komponenten für die Funktion lebenswichtig sind) und welche Komponenten ausfallen dürfen (weil sie zum Beispiel redundant vorhanden sind). In einem Zuverlässigkeitsblockdiagramm werden die für die Funktionserfüllung notwendigen Elemente (Subsysteme, Baugruppen oder Komponenten) seriell verknüpft. Die Elemente, die ausfallen dürfen, weil sie beispielsweise redundant vorhanden sind, werden parallel verknüpft. Ein Zuverlässigkeitsblockdiagramm kann daher große Unterschiede zu einem Schaltplan von Komponenten zeigen. Eine Parallelschaltung aus einer Spule und einem Kondensator beispielsweise wird im Sinne der Zuverlässigkeit im Zuverlässigkeitsblockdiagramm als Serienschaltung dargestellt. Daher muss ein Zuverlässigkeitsblockdiagramm eines technischen Systems immer mit Hilfe von Experten oder Expertenwissen entwickelt werden. Ein Zuverlässigkeitsblockdiagramm ist nicht die einzige Methode für die Zuverlässigkeitsanalyse. Ein Zuverlässigkeitsmodell eines technischen Systems kann auch in Form eines Fehler- oder Ereignisbaums sowie eines Zustandsgraphen dargestellt werden.

Bei der Analyse eines Zuverlässigkeitsblockdiagramms eines Systems bedient man sich der so genannten Top-Down-Aufstellung, bei der aus einer hierarchischen Darstellung eines komplexen technischen Systems, dieses zunächst in Subsysteme, anschließend in Baugruppen und schließlich in Einzelkomponenten zergliedert wird. Bei der Top-Down-Aufstellung wird stets bei der höchsten Dekompositionsebene begonnen. Für jede tiefere Ebene wird die entsprechende geforderte Funktion formuliert und das entsprechende Zustandsblockdiagramm aufgestellt. Dies erfolgt bis zu der untersten Ebene, bei der die Zuverlässigkeitsangaben wie Ausfallrate $\lambda$ und Reparaturrate $\mu$ für jede einzelne Komponente bekannt sind.

Nach Aufstellung des Zuverlässigkeitsmodells wie hier mittels eines Zustandsblockdiagramms wird in einem nächsten Schritt die Zuverlässigkeitsberechnung durchgeführt. Dabei werden so genannte Schnitte durch das System ermittelt. Unter einem Schnitt versteht man eine Kombination von Komponentenausfallzuständen, die zum Ausfall des Systems führen. Unter einem Minimalschnitt versteht man eine Kombination von Komponentenausfallzuständen, die für den Systemausfall über diesen Schnitt notwendig und hinreichend sind. In einem Minimalschnitt führt die Betriebsaufnahme oder die Reparatur jeder in ihm enthaltenen Komponente zur Aufhebung des Schnitts, d.h. das System funktioniert wieder.

Zur Ermittlung eines Minimalschnitts durch ein System mit einer Anzahl von Komponenten werden beispielsweise innerhalb eines Zuverlässigkeitsblockdiagramms alle Kombinationen von Komponentenausfällen überprüft, die zur Versorgungsunterbrechung zwischen dem Eingang und dem Ausgang führen. Die logische UND-Verbindung der Komponentenausfallzustände bezeichnet man als Schnitt bzw. Minimalschnitt. Entsprechend der Anzahl der logisch UND-verknüpften Komponentenausfallzustände in einem Minimalschnitt unterscheidet man zwischen Minimalschnitten unterschiedlicher Ordnung. Ein Systemausfall tritt dann auf, wenn mindestens einer der vorhandenen Minimalschnitte auftritt. Die Minimalschnitte innerhalb eines Systems werden üblicherweise aufgrund von Expertenwissen bzw. mittels einer so genannten Ausfalleffektanalyse oder FMEA (engl. Failure Mode and Effect Analysis) ermittelt. Die Theorie besagt, dass für die Zuverlässigkeitsberechnung nur die Minimalschnitte höchstens 3. Ordnung von Bedeutung sind.

In Systemen mit stochastisch-abhängigen Komponenten kann davon ausgegangen werden, dass die Minimalschnitte niedrigster Ordnung die Zuverlässigkeit des Systems bestimmen. Das bedeutet, dass die Minimalschnitte über einen Markovschen Prozess unabhängig voneinander modelliert und berechnet werden können.

Zur Bestimmung von Zuverlässigkeitsparametern einer technischen Anlage nach der klassischen Markov-Methode der Minimalschnitte soll nun ein Beispiel gegeben werden:

Betrachtet wird beispielhaft das Zuverlässigkeitsblockdiagramm aus Fig. 2. Es stellt eine Brückenschaltung mit den Komponenten A1 bis A5 im Sinne des Zuverlässigkeitsmodells dar. Bei der Brückenschaltung soll es sich um eine Gesamtsystem x handeln. Durch das Gesamtsystem x können nun mehrere Minimalschnitte gezogen werden. Zur Ermittlung der Minimalschnitte lässt man die Komponenten A1 bis A5 in allen Kombinationen ausfallen und prüft, ob das System ausfällt. In Fig. 2 ist als Beispiel ein Minimalschnitt 2. Ordnung markiert, der durch die schwarz ausgefüllten Schaltsymbole der Komponenten A1 und A2 hervorgehoben ist. Wenn die Komponenten A1 und A2 ausfallen, ist ein Ausfall des Gesamtsystems gegeben. MS1 = A1 $\wedge$ A2 ist somit ein Minimalschnitt, weil der Ausfall beider Komponenten für den Systemausfall über diesen Schnitt unbedingt notwendig ist. In Fig. 2 sind weitere mögliche Minimalschnitte M2, M3 und M4 des Gesamtsystems x eingezeichnet. Bei MS3 und MS4 handelt es sich jeweils um Minimalschnitte 3. Ordnung.

Zur Zuverlässigkeitsberechnung soll nun beispielhaft Minimalschnitt MS1 betrachtet werden. Hier werden anschließend für die Komponente A1 die entsprechenden Zuverlässigkeitsparameter $\lambda1$ der Ausfallrate und $\mu1$ der Reparaturrate ermittelt. Ebenfalls wird für die Komponente A2 die entsprechende Ausfallrate $\lambda1$ und Reparaturrate $\mu2$ ermittelt. Die Parameter können beispielsweise aus einer Tabelle entnommen werden. Jeder Wert wird innerhalb eines Vertrauensbereiches angegeben. In der Regel wird von einer Normalverteilung ausgegangen und ein einseitiges Konfidenzintervall von 95% gewählt. Anschließend wird ermittelt, welche Zustände der Minimalschnitt bestehend aus 2 Komponenten annehmen kann. In diesem Fall sind es N = 4 Zustände (Z1 = A1, A2 intakt; Z2 = A1 intakt, A2 ausgefallen; Z3 = A1 ausgefallen, A2 intakt; Z4 = A1, A2 ausgefallen). Mittels der bekannten Zuverlässigkeitsparameter der Einzelkomponenten $\lambda1$, $\lambda2$, $\mu1$ und $\mu2$ wird dann die Übergangsmatrix bestimmt. In dieser Übergangsmatrix sind alle Übergangsraten $C_{ik}$ für den Übergang vom Zustand i in den Zustand k (k <= N) angegeben. Mittels der Übergangsmatrix wird ein Gleichungssystem für die zeitlichen Änderungen der Wahrscheinlichkeiten der Zustände 1 bis 4 hergeleitet. Aus dem Gleichungssystem werden anschließend die Einzelwahrscheinlichkeiten P1(t), P2(t), P3(t) und P4(t), dass sich das System zu einem Zeitpunkt t jeweils in dem Zustand Z1, Z2, Z3 und Z4 befindet, ermittelt. Die Wahrscheinlichkeit P4(t) repräsentiert hierbei die Wahrscheinlichkeit für den betrachteten Minimalschnitt MS1 = A1 $\wedge$ A2 des Gesamtsystems,

weil beide Komponenten A1 und A2 ausgefallen sind.

Um eine Zuverlässigkeitsaussage für das Gesamtsystem x zu ermitteln, werden die Wahrscheinlichkeiten aller vorhandenen Minimalschnitte aufaddiert. In dem betrachteten Beispiel bedeutet dies:

$$P_{Gesamtsystem}^{Ausfall}(t) = P_4^{MS1}(t) + P_4^{MS2}(t) + P_4^{MS3}(t) + P_4^{MS4}(t) = e^{-\lambda_{Gesamtsystem}t} \tag{3}$$

Aus Glg. 3 wird somit die Ausfallrate für das Gesamtsystem hergeleitet. Es kann ebenso die Reparaturrate des Gesamtsystems berechnet werden.

Damit sind für das Gesamtsystem die Zuverlässigkeitsparameter $\lambda$ (Angabe in 1/h) und $\mu$ bestimmt. Aus der Ausfallrate können darüber hinaus weitere Zuverlässigkeitsparameter bestimmt werden, wie beispielsweise

- die mittlere Ausfallzeit = Mean Downtime MDT (Angabe in h)
- der mittlerer Ausfallabstandswert= Mean Time between failures MTBF (Angabe in h) = Kehrwert der Ausfallrate

Daraus lassen sich die so genannten RAM-Werte berechnen. (RAM = engl. "Reliability, Availability, Maintainability" = dt. Zuverlässigkeit, Verfügbarkeit, Wartbarkeit) Häufig werden auch Aussagen in Bezug auf die technische Sicherheit einer Anlage gefordert, d.h. Sicherheit, wenn ein Teil oder das Ganze ausgefallen ist. Man spricht in diesem Fall von so genannten RAMS-Werten. (S für engl. "Safety") Der Sicherheitsaspekt wird quantitativ mittels der Versagenswahrscheinlichkeit PFD (engl. "probability of failure on demand") erfasst. RAMS-Werte können Einzelkomponenten und Baugruppen, aber auch Subsystemen und Gesamtsystemen zugeordnet werden.

Die Zuverlässigkeitsparameter der Einzelkomponenten werden in der Regel aus Datenblättern der Herstellerfirmen oder anderen Handbüchern entnommen. Es handelt sich dabei um Standards für vorläufige Zuverlässigkeitsanalysen von Industrieerzeugnissen. Beispiele hierfür sind die IEC-Normen 61708 und 61709 (IEC = "International Electro Technical Commission"), die Siemens-Norm SN 29500 oder das Handbuch des US Verteidigungsministeriums (Military Handbook) MIL-HDBK-217F. Bei der Zuverlässigkeitsberechnung, die allein auf diesen in den Standards oder Hersteller begründeten Werten beruhen, handelt es sich demnach um rein theoretische Voraussagen oder Prognosen.

Alternativ zu diesem theoretischen Ansatz der Zuverlässigkeitsprognose nach Handbüchern bzw. Normen können die Zuverlässigkeitsparameter der betrachteten Einheit (Gesamtanlage oder Subsystem) auch basierend auf Felddaten oder während des Betriebs der betrachteten Einheit im Feld ermittelt werden. Als Felddaten werden dann zum Beispiel im Feld aufgetretene Ausfälle, die Gesamtmenge der montierten Baugruppen, oder Parameter bestimmter Betriebsbedingungen erfasst.

Ein solches System zeigt beispielsweise dieUS 2005/0027379 A1.

Ein Vergleich einer rein theoretischen Voraussage mit den im Feld gemessenen Werten führt zum Ergebnis, dass die theoretische Voraussage zu pessimistisch ist, selbst wenn man für den im Feld ermittelten Wert einen Vertrauensbereich von 90-95% (also niedrigeres Risiko) ansetzt. Es liegt grundsätzlich daran, dass die RAM-Werte der Einzelkomponenten aus den Datenblättern, Normen bzw. Katalogen sehr häufig nicht den aktuellen Stand der Qualität der Technik abbilden. Eine solche Ungenauigkeit bei der Berechnung der RAM-Werte nicht nur von Einzelkomponenten sondern als Folge auch von einem gesamten technischen System könnte unter Umständen einen entscheidenden Nachteil im Sinne des Wettbewerbs bedeuten, da häufig die auf diese Weise ermittelten Voraussagen einem Vertrieb als Grundlage und als Sicherheit für ihre Angebote dienen. In äußerst sicherheitsrelevanten Bereichen, wie beispielsweise im nuklearen Bereich, werden an die RAM-Werte der Prognose jedoch höchste Anforderungen gestellt. Die vorausgesagten RAM-Werte sollen möglichst nahe an der Realität liegen, um Sicherheitsrisiken besser abschätzen zu können.

Es ist Aufgabe der Erfindung, ein verbessertes Verfahren und System zur Ermittlung von Zuverlässigkeitsparametern einer technischen Anlage anzugeben.

Diese Aufgaben werden durch die Merkmale der unabhängigen Patentansprüche gelöst. Vorteilhafte Ausgestaltungen sind jeweils in den abhängigen Patentansprüchen wiedergegeben.

Im Gegensatz zum Stand der Technik werden nach dem erfindungsgemäßen Verfahren Zuverlässigkeitsparameter einer technischen Anlage mittels einer modifizierten Methode der Markovschen Minimalschnitte berechnet, bei der Ausfallwahrscheinlichkeiten von mehreren Komponenten infolge einer gemeinsamen Ursache und der Diagnose-Aufdeckungsgrad einer Komponente mit berücksichtigt werden. Mit anderen Worten bedeutet dies, dass zum einen der gleichzeitige Ausfall von mehreren Komponenten infolge eines stochastischen Ereignisses und zum anderen die Eigenschaft einer Komponente oder Baugruppe mit Selbstdiagnose in die Berechnung der Zuverlässigkeitsparameter mit eingehen. Das Berechnungsmodell erhält demnach nicht nur die Ausfallraten und Reparaturraten von Einzelkomponenten oder Teilsystemen, sondern auch neu bestimmte Übergangsraten zur Erfassung der neu berücksichtigten Faktoren.

Diese Modifizierung der klassischen Methode der Markovschen Minimalschnitte erlaubt eine wesentlich präzisere und wirklichkeitsnähere Voraussage der so genannten RAM-Werte einer technischen Anlage. Eine nach dem erfindungsgemäßen Verfahren berechnete Ausfallrate eines Gesamtsystems einspricht einer zuverlässigen Aussage nahe dem Feldwert, durch die auch Aussagen zur Sicherheit getroffen werden können. Dies bewirkt eine sichere Betriebsführung einer technischen Anlage, eine deutliche Steigerung der Verfügbarkeit und auch eine Prozessoptimierung. Insbesondere erlaubt die Berechnung von Voraussagen über die Zuverlässigkeit von Komponenten und Teilanlagen eine vorbeugende Wartung einer Anlage. Somit kann direkt in den technischen Prozess eingegriffen werden, falls die Bestimmung der Ausfallrate einer Komponente oder Versagenswahrscheinlichkeit dies begründet. Auch können grobe Designfehler und Schwachstellen im Sinne der Zuverlässigkeit bereits in der Projektierungsphase erkannt werden.

Die Berechnung der Zuverlässigkeitsparameter kann vorteilhaft in eine Rechnerplattform eingebunden werden, die selbst wiederum als eigenständige Komponente mit anderen Systemen oder Komponenten der technischen Anlage kommunizieren und wechselwirken kann. Das Verfahren besitzt einen allgemeingültigen Charakter und ist somit vorteilhaft auf jede technische Anlage anwendbar, unabhängig davon ob es sich um eine Kraftwerksanlage, ein Flugzeug, eine medizinische Anlage oder eine Industrieanlage handelt. Insbesondere kann es auch für ein leittechnisches System eingesetzt werden, das aus Hardwarekomponenten und Softwarekomponenten aufgebaut ist. Während sich üblicherweise Aussagen zum Thema Zuverlässigkeit der eingesetzten Software und Hardware in technischen Anlagen bei der HW-Zuverlässigkeit auf die Auswertung der Rückwaren stützen sowie bei der SW-Zuverlässigkeit auf Fehlermeldungen und Laufzeiten bzw. die Aufrufe der betrachteten SW-Bausteine, verfolgt das erfindungsgemäße Verfahren einen systematischen und allgemeingültigen Ansatz der Modellaufstellung und Analyse mit anschließender Berechnung der Zuverlässigkeitsparameter. Somit sind Systemzuverlässigkeitsaussagen für beide Bestandteile einer technischen Anlage, also sowohl für Hardals auch für Software möglich.

In einer Ausführungsvariante der Erfindung werden die Zuverlässigkeitsparameter während des Betriebs der technischen Anlage, sozusagen "online", berechnet. Dazu wird das Berechnungsmodul zur Zuverlässigkeitsberechnung entweder zeitweise an ein Leitsystem angeschlossen oder ist permanent in den Betrieb des Leitsystems einbezogen. Damit wird vorteilhaft eine höhere Präzision erreicht, da die aktuellsten Werte für die Ermittlung der Eingangsparameter zur Verfügung stehen. In der Betriebsphase ermöglichen die präzisen RAM-Werte die Entwicklung einer optimalen und kosteneffektiven Wartungsstrategie.

In einer weiteren Ausführungsvariante entsprechen die Meldungen und/oder Daten von Einzelkomponenten, Teilsystemen der technischen Anlage und der Gesamtanlage Feldwerten, die prozessnah aus leittechnischen Systemen der technischen Anlage oder im Feld gewonnen werden. Mittels der Feldwerte lassen sich die realistischsten Voraussagen treffen. Ferner können aus Felddaten qualitative Beurteilungen abgeleitet werden.

In einer weiteren Ausführungsvariante erfolgt nach der Berechnung einer Voraussage eine anschließende Überprüfung bzw. Verifikation der ermittelten Ausfallrate durch Vergleich mit den erfassten Felddaten. Befinden sich die berechneten Zuverlässigkeitsparameter nicht innerhalb eines vorgegebenen Intervalls, so werden die Zuverlässigkeitsparameter in weiteren Zyklen neu berechnet, wobei Anpassungen in den verwendeten Modellvorgaben vorgenommen werden. Dabei können auch die Ausfallwahrscheinlichkeiten von mehreren Komponenten infolge einer gemeinsamen Ursache und der Diagnose-Aufdeckungsgrad einer Komponente verifiziert werden.

Die Erfindung wird nachfolgend anhand von in Zeichnungen dargestellten Ausführungsbeispielen näher erläutert. Dabei zeigen

Fig. 1 eine schematische Darstellung eines Zustandsgraphen eines Bauteils A (Stand der Technik)

Fig. 2 eine schematische Darstellung zur Verdeutlichung der Minimalschnitte innerhalb eines Zustandsblockdiagramms (Stand der Technik)

Fig. 3 eine schematische Darstellung eines Schnitts bestehend aus zwei Baugruppen E1 und E2

Fig. 4 eine schematische Darstellung des erfindungsgemäßen ACoRAM-Systems zur Ermittlung von Zuverlässigkeitsparametern einer technischen Anlage

Fig. 5 ein Flussdiagramm zur Verdeutlichung eines Ausführungsbeispiels der Erfindung.

Ein Ausfall von zwei Baugruppen infolge gemeinsamer Ursache (engl. "common cause failure" abgekürzt CCF) wird gemäß der Norm IEC 61508-4 folgendermaßen definiert: Bei einem Ausfall infolge gemeinsamer Ursache handelt es sich um einen Ausfall, der das Ergebnis eines oder mehrere Ereignisse ist, die gleichzeitige Ausfälle von zwei oder mehreren getrennten Kanälen in einem mehrkanaligen System verursachen und zu einem Systemausfall führen.

Die Definition eines gemeinsamen Ausfalls ist jedoch in dem Sinne zu verstehen, dass ein Ausfall innerhalb eines Zeitintervalls $\Delta t$ auftritt. Demnach genügt es, wenn die zweite Komponente während der Reparatur der ersten Komponente ausfällt. Der Ausfall gemeinsamer Ursache kann so auch als Grenzfall eines Folgeausfalls innerhalb eines kleinen Zeitintervalls angesehen werden. Ferner gilt, dass CCF nicht allein von den Ausfallraten der Einzelkomponenten abhängt, sondern allein von der Implementierung des technischen Systems und seiner Struktur. CCF wird ferner durch die Betriebsbedingungen (Intensität) und die Randbedingungen wie beispielsweise Stressfaktoren, Temperatur usw. bestimmt und muss aus der Statistik ermittelt werden. So können z.B. hohe Temperaturen dazu führen, dass zwei Bauteile gleichzeitig ausfallen. Auch eine hohe Luftfeuchtigkeit oder Vibrationen innerhalb der technischen Anlage sind häufige Ursachen für einen gleichzeitigen Komponentenausfall. All diese Einflüsse werden üblicherweise mit Hilfe der Norm IEC 61508-6 anhand von in der Norm enthaltenen Fragekatalogen und Tabellen im CCF-Faktor erfasst. In diesen Normen werden demnach quantitative Auswertungen des CCF-Faktors in Form von statistischen Tabellen zur Verfügung gestellt.

CCF wird quantitativ durch die Ausfallrate $\lambda_{CCF}$ charakterisiert. Dabei gilt näherungsweise:

$$\lambda_{CCF} \approx \beta \cdot \lambda$$

Bei $\lambda$ handelt es sich um die Ausfallrate der betrachteten Komponente. $\beta$ stellt einen Gewichtungsfaktor dar. Er entspricht einem Tabellenwert aus der IEC 61508-6 Norm.

Als nächstes sollen die Eigenschaften einer Komponente mit Selbstdiagnose betrachtet werden. Laut der Norm IEC 61511-1 wird der Diagnose-Aufdeckungsgrad (engl. "diagnostic coverage" abgekürzt DC) als derjenige Anteil der vielen Zustände definiert, der durch die Ausführung einer diagnostischen Prüfung festgestellt wurde. Die diagnostische Aufdeckung eines Bauteils oder einer Baugruppe ist das Verhältnis der festgestellten Ausfallraten zu den Gesamtausfallraten des Bauteils oder der Baugruppe. Diagnostische Prüfungen können automatische Prüfungen sein oder durch Bedienereingriff regelmäßig anhand eines Zeitplans ausgelöst werden. Bei der statistischen Ermittlung der Ausfallrate solcher Komponenten wird zwischen festgestellten oder detektierten Ausfällen mit $\lambda_D$ und nicht festgestellten oder undetektierten Ausfällen mit $\lambda_U$ unterschieden.

Quantitativ wird der Diagnose-Aufdeckungsgrad oder DC-Faktor folgendermaßen erfasst:

$$DC = \frac{n_D}{n}$$

Mit $n_D$ = Anzahl der festgestellten Ausfälle und
n = Gesamtanzahl der Ausfälle

Daraus folgt: $\lambda_D = DC \cdot \lambda$ und $\lambda_U = (1 - DC) \cdot \lambda$

Die Reparaturraten einer Baugruppe mit Selbstdiagnose werden ebenfalls in $\mu_D$ und $\mu_U$ aufgeteilt.

Im Unterschied zu CCF ist der DC-Faktor von der Struktur eines technischen Systems unabhängig und bezieht sich stets auf eine einzelne Komponente oder Baugruppe.

Bei dem DC-Faktor können ferner interne und externe DC-Faktoren unterschieden werden. Während der interne DC-Faktor $DC_{int}$ die Selbstdiagnose eines Bauteils A selbst charakterisiert, wird mit $DC_{ext}$ der Fall erfasst, wenn ein externes System oder ein anderes Bauteil B meldet, dass Bauteil A nicht richtig arbeitet. Es hat sich gezeigt, dass der externe DC-Faktor für die Aussagen der Zuverlässigkeit eine wesentlich höhere Relevanz besitzt als der interne DC-Faktor $DC_{int}$.

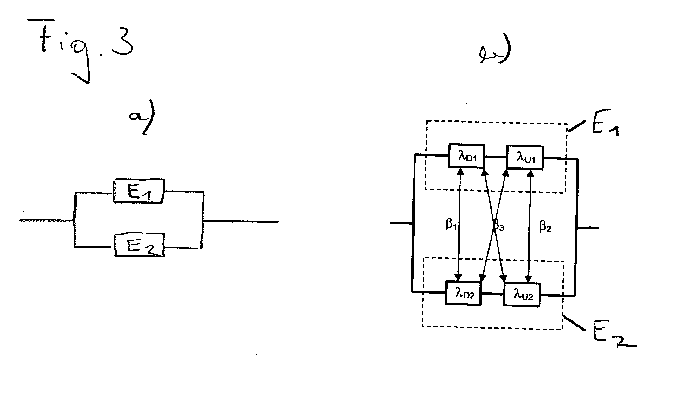

Zur Verdeutlichung des erfindungsgemäßen Verfahrens wird im Folgenden ein redundantes reparierbares System bestehend aus zwei Baugruppen E1 und E2 mit Selbstdiagnose betrachtet. Ein solches System ist in Fig. 3a dargestellt. Die Baugruppen werden als nicht identisch angesehen.

Zu beachten ist, dass jede Komponente mit Selbstdiagnose zwei Ausfallarten aufweist: festgestellte Ausfälle mit der Ausfallrate $\lambda_D$ und nicht festgestellte Ausfälle mit der Ausfallrate $\lambda_U$. In Fig. 3b ist jede Komponente (in Fig. 3b gestrichelt eingezeichnet) durch jeweils zwei Einzelkomponenten symbolisch ersetzt, um die unterschiedlichen Ausfallraten zu verdeutlichen. Die erste Baugruppe E1 ist demnach durch die Parameter $\lambda_{D1}$, $\lambda_{U1}$, $\mu_{D1}$, $\mu_{U1}$ charakterisiert und die Baugruppe E2 durch die Parameter $\lambda_{D2}$, $\lambda_{U2}$, $\mu_{D2}$, $\mu_{U2}$. Ferner wird jede Ausfallrate $\lambda_D$, $\lambda_U$ nochmals in eine interne und externe Ausfallrate aufgesplittet. Zur Berücksichtigung gemeinsamer Ausfälle und damit des CCF-Faktors sind in Fig. 3b die möglichen Kombinationen der jeweiligen Komponenten eingezeichnet, die gemeinsamen ausfallen können. Die Gewichtungsfaktoren $\beta_1$, $\beta_2$, und $\beta_3$ beinhalten diese Kombinationsmöglichkeiten. Sämtliche in diesem Abschnitt genannten Ausfallraten, Reparaturraten, CCF-Faktoren und DC-Faktoren bilden die Eingangsparameter für die Ermittlung der Übergangsmatrix.

Unter Berücksichtigung der Faktoren CCF und DC ergeben sich aus dem Zustandgraphen des Systems aus Fig. 3b zehn mögliche Zustände für das Gesamtsystem, das einen Schnitt bestehend aus zwei Komponenten oder hier Baugruppen darstellt. Daraus kann ein Zustandsgraph hergeleitet werden, aus dem wiederum die modifizierte Übergangsmatrix der einzelnen Zustände und das entsprechende System von Differentialgleichungen abgeleitet werden. Die Übergangsmatrix enthält sowohl die CCF-Faktoren als auch die DC-Faktoren. Der Zustand 10 bedeutet die Wahrscheinlichkeit, dass ein Schnitt auftritt und somit einen Gesamtausfall des Systems. In allen restlichen Zuständen bleibt das System intakt.

Aus der Wahrscheinlichkeit, dass Zustand 10 auftritt, wird demnach die Ausfallwahrscheinlichkeit für das Gesamtsystem aus Fig. 3a berechnet.

Enthält das Gesamtsystem mehrere Schnitte, so wird analog zu der in der Einleitung geschilderten Vorgehensweise vorgegangen.

● Es wird die Übergangsmatrix für jeden Schnitt berechnet. ● Anschließend wird die Wahrscheinlichkeit für das Auftreten des betrachteten Schnitts berechnet.
● Durch Addition aller Wahrscheinlichkeiten der der betrachteten Schnitte wird die Ausfallwahrscheinlichkeit für das Gesamtsystem berechnet und daraus die Ausfallrate und weitere RAM-Werte bzw. RAMS-Werte bestimmt.

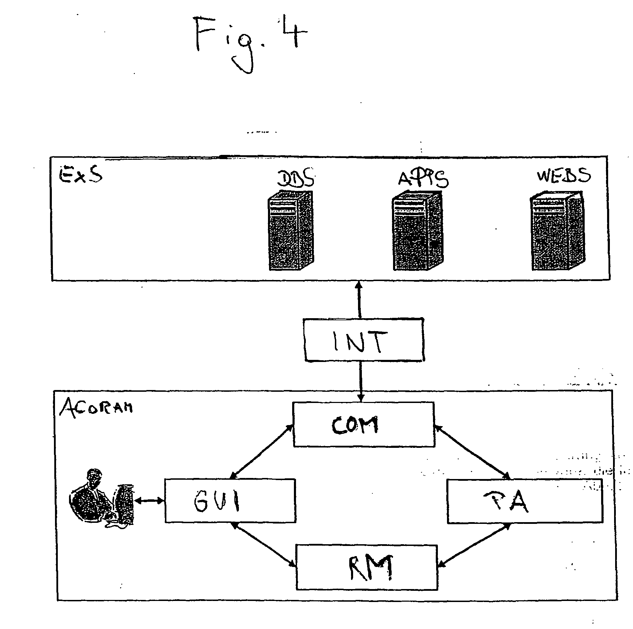

In Fig. 4 ist ein System zur Ermittlung von Zuverlässigkeitsparametern nach dem erfindungsgemäßen Verfahren dargestellt. Das System ACoRAM kann in Form einer Software-Applikation realisiert werden. Die Applikation weist in diesem Ausführungsbeispiel eine modulare Architektur auf und basiert auf Microsoft .NET Framework. Die einzelnen Module COM, PA, RAM und GUI des Systems ACoRAM unterstützen die DCOM-Technologie und standardisierte Protokolle des Datentransfers.

Das System ACoRAM umfasst ein erstes Modul COM, das zur Kommunikation mit Datenbanken und weiteren Systemen und Komponenten der technischen Anlage ausgebildet ist. In erster Linie ermöglicht das Modul COM die Zusammenarbeit des Systems ACoRAM mit Fremdsystemen ExS. Dabei wird mittels standardisierten Schnittstellen und Protokollen des Datentransfers, z.B. TCP/IP-Protokollen ein Zugriff auf externe Datenbank-, Applikations- oder WEB-Server DBS, APPS und WEBS gewährleistet. In Fig. 4 repräsentiert das Symbol INT vorhandene Schnittstellen, Driver oder Kommunikationsmittel als Verbindung zwischen den Fremdsystemen und dem System ACoRAM. Auch eine Kommunikation über Funk mit den entsprechenden Fremdsystemen ist denkbar. In einer Leittechnikanlage könnte das System ACoRAM beispielsweise an das vorhandene Bussystem angeschlossen werden, sodass eine direkte Verbindung mit dem Prozessführungs- und Informationssystem, dem Projektierungssystem, dem Engineering-System, dem Diagnosesystem oder dem Automatisierungssystem besteht. Eine Integration in bereits existierende leittechnische Systeme ist über eine entsprechende Anpassung der Schnittstellen möglich.

Mittels des Kommunikationsmoduls COM werden Meldungen und/oder Daten aus dem Fremdsystem, beispielsweise dem leittechnischen System ausgelesen. Diese "Rohdaten" in Form von Anlageninformationen, Prozessdaten, Fehlermeldungen und Messwerte werden anschließend an ein zweites Modul, das Parser-Modul, weitergegeben. Das Parser-Modul ermöglicht die syntaktische Analyse der Meldungen und/oder Daten und eine Umwandlung des Datenformats des Fremdsystems in das Datenformat des ACoRAM Systems. Im Parser-Modul PA wird außerdem die benötigte Statistik über die ausgelesenen Daten erstellt.

Rohdaten und Statistik können in eigenen Datenbanken des ACoRAM-Systems (hier nicht dargestellt) abgelegt werden. Je nachdem, welche Vertrauensbereiche bei den statistischen Verteilungen der Rohdaten angenommen werden, können diese Daten verändert werden. In der systemeigenen Datenbank sind auch strukturelle Darstellungen der technischen Anlage (im Sinne der Zuverlässigkeit) wie Zustandsblockdiagramme bzw. Zustandsgraphen abgelegt.

Aus den gesammelten Informationen des Parser-Moduls und der Datenbanken werden die Eingangsparameter für das Zuverlässigkeitsberechnungsmodell ermittelt. Dabei handelt es sich im Wesentlichen um Ausfallraten von Einzelkomponenten, Teilsystemen oder des Gesamtsystems, Reparaturraten von Einzelkomponenten, Teilsystemen oder des Gesamtsystems, um Ausfallsraten infolge gemeinsamer Ursache, Ausfallraten von Komponenten mit Selbstdiagnose, bei denen der Ausfall detektiert wurde und Ausfallraten von Komponenten mit Selbstdiagnose, bei denen der Ausfall nicht detektiert wurde.

Die Eingangsparameter werden an das Rechenmodul RM weitergeleitet, in dem basierend auf der Methode der Markovschen Minimalschnitte unter Berücksichtigung der Ausfallwahrscheinlichkeiten infolge gemeinsamer Ursache und des Diagnose-Aufdeckungsgrads die eigentliche Zuverlässigkeitsparameterberechnung erfolgt. Dabei wird zunächst ein vollständiger Zustandsgraph oder ein Zuverlässigkeitsblockmodell eines Minimalschnitts erzeugt. Danach wird eine entsprechende Übergangsmatrix aufgebaut. Diese wird zum Beispiel an einen Application-Server APPS des Fremdsystems ExS mit mathematischer Software weitergeleitet, wo aus der Übergangsmatrix, ein System von Differentialgleichungen für die zeitlichen Änderungen der Wahrscheinlichkeiten der einzelnen Zustände aufgestellt und numerisch gelöst werden.

Das vierte Modul dieses Ausführungsbeispiels entspricht einer Ausgabeeinheit GUI. Es handelt sich dabei um eine graphische Benutzeroberfläche, die auf der HTML-Technologie basiert. Sie ermöglicht in Verbindung mit dem WEB-Server WEBS die Unabhängigkeit vom Betriebssystem und den Zugang zum ACoRAM-System von mehreren Benutzern gleichzeitig und eine gemeinsame Bedienoberfläche zur Wiedergabe der berechneten Zuverlässigkeitsparameter.

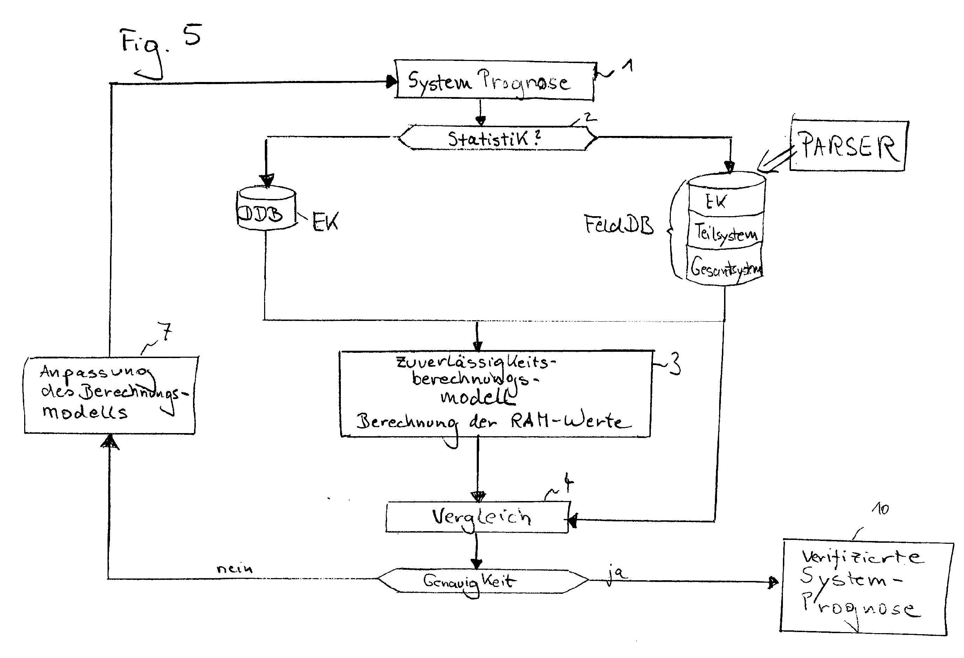

In Fig. 5 ist ein Flussdiagramm zur Verdeutlichung der Vorgehensweise der Ermittlung der Zuverlässigkeitsparameter, wenn nicht nur eine Voraussage (Prediktion oder Prognose) der Zuverlässigkeitsparamter eines Gesamtsystems getätigt werden soll, sondern auch eine Verifizierung, d.h. dass nach der Berechnung ein Vergleich zwischen den berechneten Parametern mit gemessenen oder aus Prozessdaten ermittelten Felddaten erfolgt.

In einem Ausführungsbeispiel wird die Zuverlässigkeitsberechnung in zwei Phasen durchgeführt:

1.) Prognose:

Dies ist bereits in der Projektierungsphase eines leittechnischen Systems möglich. Dafür wird die Struktur des leittechnischen Systems aus dem Engineering System entnommen, ein entsprechendes Modell in Form eines Zuverlässigkeitsblockdiagramms oder Zustandsgraphen wird aufgebaut und die Zuverlässigkeitsparameter der Baugruppen werden mit "Standardwerten" belegt.

2.) Verifizierung:

In dieser Phase werden die Werte der Zuverlässigkeitsparameter der jeweiligen Baugruppen aus den Prozessdaten bzw. aus der Statistik mit einem Vertrauensintervall ermittelt. Diese Feldwerte der Zuverlässigkeitsparameter werden in das Berechnungsmodell eingeführt. Die Ergebnisse aus der Verifizierungsphase werden mit den Ergebnissen aus der Prognosephase verglichen.

Ein möglicher Ausgangspunkt für die Verifizierung, die in der Regel in mehreren Berechnungszyklen abläuft, ist eine System Prognose (Kasten 1 in Fig. 5).

Anschließend wird überprüft, ob eine repräsentative Menge von Daten und Beobachtungen vorhanden sind, um die Eingangsparameter für das Berechnungsmodell zu ermitteln (Kasten 2 in Fig. 5). Diese Überprüfung gilt im Wesentlichen nur für die hier als Felddatenbank FeldDB bezeichnete Datenbank, in der Prozessdaten und Messwerte, die prozessnah im Feld gewonnen werden, abgelegt sind. Sind in der Felddatenbank FeldDB nicht genügend Daten und Beobachtungen vorhanden, so werden die Eingangsparameter für das Berechnungsmodell aus der Default-Datenbank DDB entnommen. Die Default-Datenbank DDB, in der Standardwerte aus Handbüchern und Datenblättern für die Ausfallraten, Reparaturraten, DC- und CC-Faktoren für Einzelkomponenten EK hinterlegt sind, weist einen konstanten Datenstamm auf. In der Felddatenbank FeldDB sind die Ausfallraten, Reparaturraten, DC- und CC-Faktoren entsprechend der Struktur oder Hierarchie der technischen Anlage für Einzelkomponenten EK, für Teilsysteme und das Gesamtsystem geordnet abgelegt. Die Felddatenbank FeldDB steht in Verbindung mit dem Parser-Modul PA. Auf diese Weise können in der Felddatenbank auch Ausfallraten, Reparaturraten, DC- und CC-Faktoren abgelegt werden, die aus einem leittechnischen System oder einem anderen Fremdsystem ExS entnommen und in ein systemeigenes Format umgewandelt worden sind. Vor der eigentlichen Zuverlässigkeitsberechnung (Kasten 3, Fig. 5) wird zunächst bestimmt, für welche Hierarchieebene die Zuverlässigkeitsparameter bestimmt werden sollen. Als Beispiel wird hier angenommen, dass die Ausfallrate für ein Subsystem einer technischen Anlage berechnet werden soll. Die Eingangsparameter für das Berechnungsmodell werden stets aus der darunterliegenden Hierarchieebene entnommen. Entsprechend dieser Anforderung werden in dem betrachteten Beispiel als Eingangsparameter die Ausfallraten, Reparaturraten, DC- und CCF-Faktoren der im Subsystem enthaltenen Einzelkomponenten aus einer oder beiden Datenbanken entnommen. Das Berechnungsmodell ermittelt anschließend für den oder die Schnitte des betrachteten Subsystems mittels der erfindungsgemäß modifizierten Markov-Methode die gesuchte Ausfallrate des Subsystems. Anschließend findet ein Vergleich zwischen der theoretisch berechneten Ausfallrate des betrachteten Subsystems und dem aus der Felddatenbank entnommenen "Feldwert" der Ausfallrate des Subsystems statt (Kasten 4, Fig. 5). Bei ausreichender Genauigkeit, d.h. wenn die beiden Werte innerhalb eines vorgegebenen Vertrauensintervalls liegen, wird die theoretisch berechnete Ausfallsrate für das betrachtete Subsystem ausgegeben(Kasten 10, Fig. 5). Weichen die Werte zu stark voneinander ab, d.h. wenn der theoretisch berechnete Wert und der Feldwert nicht innerhalb eines vorgegebenen Vertrauensintervalls liegen, so muss das Berechnungsmodell weiter angepasst werden (Kasten 7, Fig. 5). Die Anpassung des Berechnungsmodells erfolgt im Wesentlichen durch Veränderung der DC- und CCF-Faktoren. Da in den CCF-Faktor viele weitere Faktoren wie Umgebungstemperatur, Verspannungen innerhalb eines Bauteils oder andere Bauteileigenschaften eingehen, können diese als Freiheitsgrade zur Modellanpassung genutzt werden. Mit den neu ermittelten Werten der DC- und CCF-Faktoren wird der Berechnungsalgorithmus erneut durchlaufen.

**Patentansprüche**

1. Verfahren zur Ermittlung von Zuverlässigkeitsparametern einer technische Anlage, bei dem

- aus Meldungen und/oder Daten von Einzelkomponenten, Teilsystemen der technischen Anlage oder der Gesamtanlage Eingangsparameter für ein Zuverlässigkeitsberechnungsmodell ermittelt werden,
- dass diese Eingangsparameter mindestens folgende Parameter umfassen: Ausfallraten von Einzelkomponenten oder Teilsystemen, Reparaturraten von Einzelkomponenten oder Teilsystemen, Ausfallsraten infolge gemeinsamer Ursache, Ausfallraten von Komponenten mit Selbstdiagnose, bei denen der Ausfall detektiert wurde und Ausfallraten von Komponenten mit Selbstdiagnose, bei denen der Ausfall nicht delektiert wurde,
- mittels dieser Eingangsparameter und des Berechnungsmodells der Methode der Markovschen Minimalschnitte unter Berücksichtigung von Ausfallwahrscheinlichkeiten, infolge gemeinsamer Ursache und des Diagnose-Aufdeckungsgrads Zuverlässigkeitsparameter (RAM) für eine Einzelkomponente, ein Subsystem oder ein Gesamtsystem der technischen Anlage berechnet werden, sodass anhand dieser Werte eine Vorhersage über die Zuverlässigkeit, Verfügbarkeit und Wartbarkeit der technischen Anlage getroffen werden kann,
**dadurch gekennzeichnet, dass** die Berechnung der Zuverlässigkeitsparameter mittels der Methode der Markovschen Minimalschnitte folgende Schritte aufweist:

- Es wird ein Zuverlässigkeitsmodell gebildet, indem eine logische Struktur eines Teilsystems der technischen Anlage nach einer Top-Down-Aufstellung aufgestellt wird,
- Innerhalb der logischen Struktur der technischen Anlage werden relevante Minimalschnitte bis maximal dritter Ordnung ermittelt.
- Innerhalb jedes Schnitts werden unter Berücksichtigung eines Vertrauensbereichs die Eingangsparameter für alle Komponenten des Schnitts ermittelt und die entsprechenden Raten ermittelt.
- Mittels der Eingangsparameter wird eine Zustandsübergangsmatrix für jeden Minimalschnitt ermittelt.
- Mittels der Zustandsübergangsmatrix wird ein System von Differentialgleichungen erstellt, aus dem die Wahrscheinlichkeit für das Auftreten der einzelnen Minimalschnitte ermittelt wird.
- Durch Addition aller Wahrscheinlichkeiten für das Auftreten eines Minimalschnitts wird die Ausfallwahrscheinlichkeit, die Ausfallrate und Reparaturrate des Teilsystems ermittelt.

2. Verfahren nach Anspruch 1,
bei dem die Berechnung der Zuverlässigkeitsparameter während des Betriebs der technischen Anlage erfolgt, die Meldungen und/oder Daten von Einzelkomponenten, Teilsystemen der technischen Anlage oder der Gesamtanlage online ermittelt werden.

3. Verfahren nach Anspruch 1,
bei dem die Meldungen und/oder Daten von Einzelkomponenten, Teilsystemen der technischen Anlage und der Gesamtanlage Feldwerten entsprechen, die prozessnah aus leittechnischen Systemen der technischen Anlage oder im Feld gewonnen werden.

4. Verfahren nach Anspruch 1,
bei dem die Eingangsparameter aus Default-Daten aus einer Datenbank für die Einzelkomponenten der technischen Anlage ermittelt werden.

5. Verfahren nach einem der Ansprüche 1 bis 4,
bei dem

- die mittels des Berechnungsmodells theoretisch berechneten Zuverlässigkeitsparameter mit zuvor ermittelten Feldwerten verglichen werden,
- die theoretisch berechneten Zuverlässigkeitsparameter ausgegeben werden, wenn sie und die Feldwerte innerhalb eines vorgegebenen Genauigkeitsintervalls liegen

6. Verfahren nach einem der Ansprüche 1 bis 4,
bei dem

- die mittels des Berechnungsmodells theoretisch berechneten Zuverlässigkeitsparameter mit zuvor ermittelten Feldwerten verglichen werden,
- eine Anpassung des Berechnungsmodells durchgeführt wird, wenn die theoretisch berechneten Zuverlässigkeitsparameter und die Feldwerte außerhalb des vorgegebenen Genauigkeitsintervalls liegen,
- dass die Berechnung der Zuverlässigkeitsparameter mit anschließendem Vergleich mit den Feldwerten solange erfolgt, bis die theoretisch berechneten Werte und die Feldwerte innerhalb eines vorgegebenen Genauigkeitsintervalls liegen.

**7.** Verfahren nach Anspruch 6,
bei dem die Anpassung des Berechnungsmodells erfolgt, indem die Raten zur Erfassung der Ausfallwahrscheinlichkeiten infolge gemeinsamer Ursache und des Diagnose-Aufdeckungsgrads verändert werden.

**8.** System (ACoRAM) zur Ermittlung von Zuverlässigkeitsparametern für eine technische Anlage,
aufweisend

- ein erstes Modul (COM) zur Kommunikation mit Datenbanken und weiteren Systemen (ExS) und Komponenten der technischen Anlage zum Auslesen von Meldungen und/oder Daten der technischen Anlage,
- ein zweites Modul (PA) zur Ermittlung von Eingangsparametern für ein Zuverlässigkeitsberechnungsmodell aus den ausgelesenen Meldungen und/oder Daten, wobei die Eingangsparameter mindestens Ausfallraten von Einzelkomponenten oder Teilsystemen, Reparaturraten von Einzelkomponenten oder Teilsystemen, Ausfallsraten infolge gemeinsamer Ursache, Ausfallraten von Komponenten mit selbstdiagnose, bei denen der Ausfall detektiert wurde, und Ausfallraten von Komponenten mit Selbstdiagnose, bei denen der Ausfall nicht detektiert wurde, umfassen,
- ein Rechenmodul (RM), in dem mit Hilfe der Eingangsparameter basierend auf einer der Methode der Markovschen Minimalschnitte unter Berücksichtigung von Ausfallwahrscheinlichkeiten infolge gemeinsamer Ursache und des Diagnose-Aufdeckungsgrads Zuverlässigkeitsparameter (RAM) für eine Einzelkomponente, ein Subsystem oder ein Gesamtsystem der technischen Anlage berechnet werden - eine Ausgabeeinheit (GUI) als graphische Bedienoberfläche zur Wiedergabe der berechneten Zuverlässigkeitsparameter (RAM), **dadurch gekennzeichnet, dass** die auf der Methode der Markovschen Minimalschnitte basierende Methode folgende Schritte aufweist:

- Es wird ein Zuverlässigkeitsmodell gebildet, indem eine logische Struktur eines Teilsystems der technischen Anlage nach einer Top-Down-Aufstellung aufgestellt wird,
- Innerhalb der logischen Struktur der technischen Anlage werden relevante Minimalschnitte bis maximal dritter Ordnung ermittelt.
- Innerhalb jedes Schnitts werden unter Berücksichtigung eines Vertrauensbereichs die Eingangsparameter für alle Komponenten des Schnitts ermittelt und die entsprechenden Raten ermittelt.
- Mittels der Eingangsparameter wird eine Zustandsübergangsmatrix für jeden Minimalschnitt ermittelt.
- Mittels der Zustandsübergangsmatrix wird ein System von Differentialgleichungen erstellt, aus dem die Wahrscheinlichkeit für das Auftreten der einzelnen Minimalschnitte ermittelt wird.
- Durch Addition aller Wahrscheinlichkeiten für das Auftreten eines Minimalschnitts wird die Ausfallwahrscheinlichkeit, die Ausfallrate und Reparaturrate des Teilsystems ermittelt.

**9.** System nach Anspruch 8,
**dadurch gekennzeichnet, dass** ferner eine Datenbank umfasst ist, in der für Einzelkomponenten, Subsysteme und das Gesamtsystem Erfahrungswerte der Eingangsparameter hinterlegt sind, und mindestens eine weitere Datenbank, in der für Einzelkomponenten, Subsysteme und das Gesamtsystem Feldwerte der Eingangsparameter hinterlegt sind, wobei es sich bei den Feldwerten um Anlagendaten und Fehlermeldungen aus der technischen Anlage handelt.

**10.** System nach einem der vorhergehenden Ansprüche,
**dadurch gekennzeichnet, dass** es sich bei der technischen Anlage um eine leittechnische Anlage handelt und bei den weiteren Systemen um ein Prozessführungs- und Informationssystem (OM), um ein Projektierungssystem (ES), ein Diagnosesystem (DS) und/oder ein Automatisierungssystem (AS) handelt.

**Claims**

**1.** Method for determining reliability parameters of a technical installation,
wherein

- input parameters for a reliability calculation model are determined from messages and/or data from individual components, subsystems of the technical installation or the overall installation,
- said input parameters include at least the following parameters: failure rates of individual components or subsystems, repair rates of individual components or subsystems, common cause failure rates, failure rates of self-diagnosis components in which the failure was detected, and failure rates of self-diagnosis components in which the failure was not detected,
- reliability parameters (RAM) for an individual component, a subsystem or an overall system of the technical installation are calculated by means of said input parameters and the calculation model of the Markov minimum cut method taking into account common cause and diagnostic coverage failure probabilities, such that a prediction about the reliability, availability and maintainability of the technical installation can be made on the basis of said values,
**characterised in that** the calculation of the reliability parameters by means of the Markov minimum cut method comprises the following steps:

- A reliability model is formed by setting up a logical structure of a subsystem of the technical installation according to a top-down approach.
- Within the logical structure of the technical installation, relevant minimum cuts up to a maximum of third order are determined.
- Within each cut, the input parameters for all components of the cut are determined taking into account a confidence interval and the corresponding rates are determined.
- A state transition matrix is determined for each minimum cut by means of the input parameters.
- A system of differential equations is created by means of the state transition matrix, from which system the probability for the occurrence of the individual minimum cuts is determined.
- The failure probability, the failure rate and the repair rate of the subsystem are determined by adding all the probabilities for the occurrence of a minimum cut.

2. Method according to claim 1,
wherein the reliability parameters are calculated during the operation of the technical installation, with messages and/or data of individual components, subsystems of the technical installation or the overall installation being determined online.

3. Method according to claim 1,
wherein the messages and/or data from individual components, subsystems of the technical installation and the overall installation correspond to field values that are acquired close to process level from process control systems of the technical installation or in the field.

4. Method according to claim 1,
wherein the input parameters are determined from default data from a database for the individual components of the technical installation.

5. Method according to one of claims 1 to 4,
wherein

- the reliability parameters calculated theoretically by means of the calculation model are compared with previously determined field values,
- the theoretically calculated reliability parameters are output if they and the field values lie within a predefined precision interval.

6. Method according to one of claims 1 to 4,
wherein

- the reliability parameters calculated theoretically by means of the calculation model are compared with previously determined field values,
- an adjustment of the reliability calculation model is performed if the theoretically calculated reliability parameters and the field values lie outside the predefined precision interval,
- the calculation of the reliability parameters with subsequent comparison with the field values is repeated until such time as the theoretically calculated values and the field values lie within a predefined precision interval.

7. The method according to claim 6,
wherein the calculation model is adjusted by varying the rates for acquiring the common cause and diagnostic coverage failure probabilities.

8. System (ACoRAM) for determining reliability parameters for a technical installation,

comprising

- a first module (COM) for communication with databases and other systems (ExS) and components of the technical installation for the purpose of reading out messages and/or data of the technical installation,
- a second module (PA) for determining input parameters for a reliability calculation model from the read-out messages and/or data, wherein the input parameters include at least failure rates of individual components or subsystems, repair rates of individual components or subsystems, common cause failure rates, failure rates of self-diagnosis components in which the failure was detected, and failure rates of self-diagnosis components in which the failure was not detected,
- a computing module (RM) in which reliability parameters (RAM) for an individual component, a subsystem or an overall system of the technical installation are calculated with the aid of the input parameters based on a Markov minimum cut method taking into account common cause and diagnostic coverage failure probabilities,
- an output unit (GUI) as a graphical user interface for reproducing the calculated reliability parameters (RAM), **characterised in that**

the method based on the Markov minimum cut method comprises the following steps:

- A reliability model is formed by setting up a logical structure of a subsystem of the technical installation according to a top-down approach.
- Within the logical structure of the technical installation, relevant minimum cuts up to a maximum of third order are determined.
- Within each cut, the input parameters for all components of the cut are determined taking into account a confidence interval and the corresponding rates are determined.
- A state transition matrix is determined for each minimum cut by means of the input parameters.
- A system of differential equations is created by means of the state transition matrix, from which system the probability of the occurrence of the individual minimum cuts is determined.
- The failure probability, the failure rate and the repair rate of the subsystem are determined by adding all the probabilities for the occurrence of a minimum cut.

9. System according to claim 8, **characterised in that** included in addition are a database in which empirical values for the input parameters are stored for individual components, subsystems and the overall system, and at least one further database in which field values for the input parameters are stored for individual components, subsystems and the overall system, wherein the field values are installation data and error messages from the technical installation.

10. System according to one of the preceding claims, **characterised in that** the technical installation is a process control installation and the further systems are a process control and information system (OM), a project engineering and configuration system (ES), a diagnostic system (DS) and/or an automation system (AS).

**Revendications**

1. Procédé de détermination de paramètres de fiabilité d'une installation technique, dans lequel

- on détermine, à partir de messages et/ou de données d'éléments individuels, de sous-systèmes de l'installation technique ou de toute l'installation, des paramètres d'entrée pour un modèle de calcul de fiabilité,
- en ce que ces paramètres d'entrée comprennent au moins des paramètres suivants : taux de défaillance d'éléments individuels ou de sous-systèmes, taux de réparation d'éléments individuels ou de sous-systèmes, taux de défaillance en raison d'une cause commune, taux de défaillance d'éléments ayant le même diagnostic, dans lesquels la défaillance a été détectée, et taux de défaillance d'éléments ayant le même diagnostic, dans lesquels la défaillance n'a pas été détectée,
- au moyen de ces paramètres d'entrée et du modèle de calcul, on calcule la méthode des coupes minimum markoviennes en tenant compte de probabilités de défaillance en raison d'une cause commune et du degré de découverte de diagnostic des paramètres ( RAM ) de fiabilité pour un élément individuel, un sous-système ou un système total de l'installation technique, de manière à pouvoir au moyen de ces valeurs faire une prédiction sur la fiabilité, la disponibilité et la maintenabilité de l'installation technique, **caractérisé en ce que** le calcul des paramètres de fiabilité au moyen de la méthode des coupes minimum markoviennes comporte les stades suivants :

- on forme un modèle de fiabilité en établissant une structure logique d'un sous-système de l'installation technique suivant une disposition top-down,
- on détermine au sein de la structure logique de l'installation technique des coupes minimum pertinentes jusqu'au troisième ordre au maximum,
- dans chaque coupe, on détermine en tenant compte d'une plage de confiance, les paramètres d'entrée pour tous les éléments de la coupe et on détermine les taux correspondants,
- au moyen des paramètres d'entrée, on détermine une matrice de transition d'état pour chaque coupe minimum,
- au moyen de la matrice de transition d'état, on élabore un système d'équations différentielles, à partir duquel on détermine la vraisemblance de l'apparition des diverses coupes minimum,
- en additionnant toutes les probabilités de l'apparition d'une coupe minimum, on détermine la probabilité de défaillance, le taux de défaillance et le taux de réparation du sous-système.

2. Procédé suivant la revendication 1,
dans lequel on effectue le calcul des paramètres de fiabilité pendant le fonctionnement de l'installation technique en déterminant en ligne les messages et/ou les données d'éléments individuels, de sous-systèmes de l'installation technique ou de toute l'installation.

3. Procédé suivant la revendication 1,
dans lequel les messages et/ou les données d'éléments individuels, de sous-systèmes de l'installation technique et de toute l'installation correspondent à des valeurs de terrain, qui sont obtenues en étant près du processus à partir de systèmes techniques de conduite de l'installation technique ou sur site.

4. Procédé suivant la revendication 1,
dans lequel on détermine les paramètres d'entrée à partir de données d'erreur d'une base de données pour les éléments individuels de l'installation technique.

5. Procédé suivant l'une des revendications 1 à 4,
dans lequel

- on compare les paramètres de fiabilité calculés théoriquement au moyen du modèle de calcul à des valeurs de terrain déterminées précédemment,
- on émet les paramètres de fiabilité calculés théoriquement lorsque ceux-ci et les valeurs de terrain se trouvent dans un intervalle de précision donné à l'avance.

6. Procédé suivant l'une des revendications 1 à 4,
dans lequel

- on compare les paramètres de fiabilité calculés théoriquement au moyen du modèle de calcul à des valeurs de terrain déterminées auparavant,
- on effectue une adaptation du modèle de calcul lorsque les paramètres de fiabilité calculés théoriquement et les valeurs de terrain sont en-dehors de l'intervalle de précision donné à l'avance,
- en ce qu'on effectue le calcul des paramètres de fiabilité en le faisant suivre d'une comparaison avec les valeurs de terrain jusqu'à ce que les valeurs calculées théoriquement et les valeurs de terrain se trouvent dans un intervalle de précision donné à l'avance.

7. Procédé suivant la revendication 6,
dans lequel on effectue l'adaptation du modèle de calcul en modifiant les taux de détection des probabilités de défaillance due à une cause commune et du degré de découverte du diagnostic.

8. Système ( ACoRAM ) de détermination de paramètres de fiabilité d'une installation technique,
comprenant

- un premier module ( COM ) de communication avec des bases de données et avec d'autres systèmes ( ExS ) et des éléments de l'installation technique pour lire des messages et/ou des données de l'installation technique,
- un deuxième module ( PA ) de détermination de paramètres d'entrée pour un modèle de calcul de fiabilité à partir des messages et/ou des données lus, les paramètres d'entrée comprenant au moins des taux de défaillance d'éléments individuels ou de sous-systèmes, des taux de réparation d'éléments individuels ou de sous-systèmes, des taux de défaillance due à une cause commune, des taux de défaillance d'éléments ayant le même diagnostic, dans lesquels la défaillance a été détectée, et des taux de défaillance d'éléments ayant le même diagnostic, dans lesquels la défaillance n'a pas été détectée,

- un module ( RM ) informatique, dans lequel, à l'aide des paramètres d'entrée et sur la base de l'une des méthodes des coupes minimum markoviennes et en tenant compte de probabilités de défaillance due à une cause commune et du degré de découverte du diagnostic, on calcule des paramètres ( RAM ) de fiabilité pour un élément individuel, un sous-système ou un système total de l'installation technique,

- une unité ( GUI ) d'émission sous la forme d'une surface graphique de service pour reproduire les paramètres ( RAM ) de fiabilité qui ont été calculés,

**caractérisé en ce que** la méthode fondée sur la méthode des coupes minimum markoviennes comprend les stades suivants :

- on forme un modèle de fiabilité en établissant une structure logique d'un sous-système de l'installation technique suivant une disposition top-down,
- on détermine au sein de la structure logique de l'installation technique des coupes minimum pertinentes jusqu'au troisième ordre au maximum,
- dans chaque coupe, on détermine en tenant compte d'une plage de confiance les paramètres d'entrée pour tous les éléments de la coupe et on détermine les taux correspondants,
- au moyen des paramètres d'entrée, on détermine une matrice de transition d'état pour chaque coupe minimum,
- au moyen de la matrice de transition d'état, on élabore un système d'équations différentielles, à partir duquel on détermine la vraisemblance de l'apparition des diverses coupes minimum,
- en additionnant toutes les probabilités de l'apparition d'une coupe minimum, on détermine la probabilité de défaillance, le taux de défaillance et le taux de réparation du sous-système.

9. Système suivant la revendication 8,
   **caractérisé en ce qu'**il comprend, en outre, une base de données, dans laquelle des valeurs d'expérience des paramètres d'entrée sont mémorisées pour des éléments individuels, des sous-systèmes et le système total, et au moins une autre base de données, dans laquelle des valeurs de terrain des paramètres de données pour des éléments individuels, des sous-systèmes et tout le système sont mémorisées, les valeurs de terrain étant des données d'installation et des messages d'erreur provenant de l'installation technique.

10. Système suivant l'une des revendications précédentes, **caractérisé en ce que** l'installation technique est une installation de technique de conduite et dans lequel les autres systèmes sont un système ( OM ) de conduite de processus et d'information, un système ( ES ) de projet, un système ( DS ) de diagnostic et/ou un système ( AS ) d'automatisation.

Fig. 1

$$\lambda \cdot \Delta t$$

$$\mu \cdot \Delta t$$

Fig. 2

MS1' = A1 ∧ A2

Fig. 3

a)

b)

Fig. 4

EP 2 122 428 B1

Fig. 5

**EP 2 122 428 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050027379 A1